# EUROPEAN PATENT SPECIFICATION

(11) **EP 1 773 465 B1**
(45) Date of publication and mention of the grant of the patent: **17.03.2010**
(21) Application number: 05756652.3
(22) Date of filing: 04.07.2005
(51) Int. Cl.: B01D 46/00, F24F 13/075

(54) **AN AIR FILTER UNIT**
LUFTFILTEREINHEIT
FILTRE A AIR

(30) Priority: 05.07.2004 SE 0401746
(43) Date of publication of application: 18.04.2007
(73) Proprietor: CAMFIL AB, 619 33 Trosa (SE)
(72) Inventor: LANCIEUX, Cédric, F-60280 Margny-les-Compiegne (FR)
(74) Representative: Hyltner, Jan-Olof
(86) International application number: PCT/SE2005/001095
(87) International publication number: WO 2006/004535

(56) References cited:
- EP-A- 0 787 954
- EP-A2- 0 787 954
- WO-A1-2005/017419
- DE-A1- 2 340 781
- DE-A1- 2 608 792
- DE-A1- 2 608 792
- DE-A1- 19 958 659
- GB-A- 548 080
- GB-A- 2 120 778
- JP-A- 2000 205 620
- JP-A- 2000 205 620
- US-A- 2 630 054
- US-A- 3 356 006
- US-A- 4 616 558
- US-A- 5 167 577
- US-A- 5 318 474
- DATABASE WPI Week 200333, Derwent Publications Ltd., London, GB; Class Q74, AN 2003-348871, XP002992087 & JP 2003 106633 A (KAWAMURA DENKI SANGYO KK) 09 April 2003

## Description

### TECHNICAL FIELD

The present invention relates to an air filter unit having an inlet side and an outlet side and comprising a filter package and a grid disposed on the outlet side of the filter unit, said filter package and said grid being mounted in a frame.

### BACKGROUND OF THE INVENTION

Air filter units of the kind mentioned above are often used to provide clean environment at work stations for electronic circuits or other work stations demanding a dust free environment or the like. For such applications it is essential to have an even air flow, without eddies or turbulence.

Such air filter units can also be used as air inlets in so called clean rooms, in which a clean atmosphere in the whole room is obtained by forced circulation of air. The air is let in from units in the ceiling and preferably taken out through a perforated floor and thereafter again let in through the air filter units in the ceiling. Also in this application it is essential to have an even air flow.

It is not unusual that several air filter units are needed in order to create a clean space of a certain size. In such a case, "dead zones" between the air flows from adjacent air filter units may appear.

An objective of the present invention is to provide an air filter unit according to the introductory portion of the description which has a laterally extended air flow compared to known air filter units of this type, reduces dead zones between adjacent such units, while still providing an even air flow.

### SUMMARY OF THE INVENTION

This objective is according to the invention accomplished by an air filter unit according to claim 1

In a preferred embodiment said protruding part of the grid comprises arcuate sides having the same radius of curvature. Said radius of curvature of the sides of said protruding part of the grid is 300-550 mm, preferably 350-500 mm. Said protruding part of the grid has advantageously the form of a part of a sphere.

The grid is made of plastic material, preferably polycarbonate.

### BRIEF DESCRIPTION OF THE DRAWINGS

The invention will now be described with reference to the enclosed figures, of which;
fig. 1 schematically discloses an air filter unit according to a preferred embodiment of the invention in a plan view from below,
fig. 2 discloses a cross-sectional view along line II-II in figure 1,
fig. 3 schematically discloses the air flow through an air filter unit according to the present invention, and
fig. 4 illustrates the air flow from an air filter unit according to the invention.

### DESCRIPTION OF EMBODIMENTS

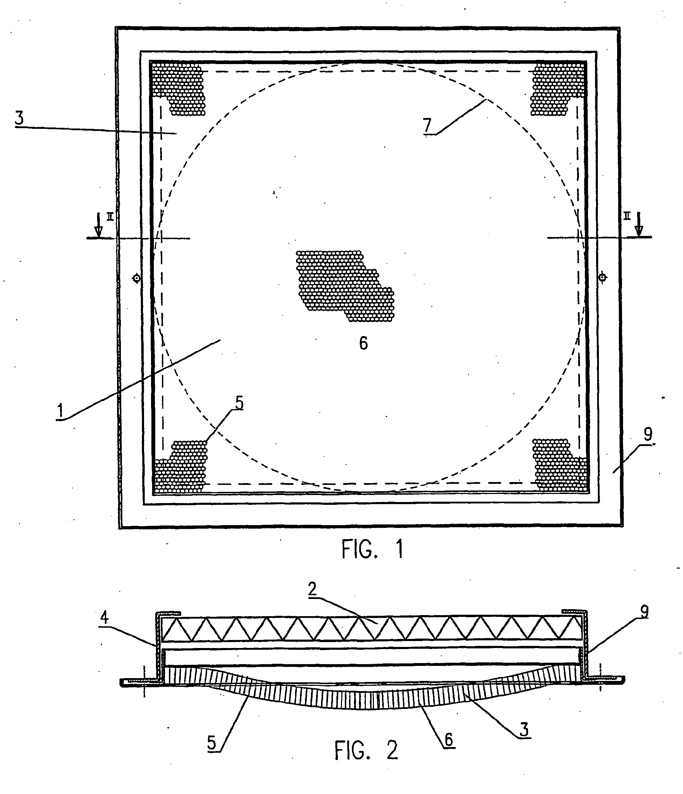

In figures 1 and 2 a preferred embodiment of an air filter unit 1 according to the present invention is schematically disclosed. The filter unit 1 is comprised of a filter package 2 held in a filter frame 4 , a grid 3 held in a grid frame 9, the frames 4 and 9 being held together by screws or the like elements.

The grid 3 is comprised of a great number of small tubes 5 being affixed to each other in some suitable manner, for example glued to each other. The tubes has a diameter of 3-9 mm, preferably 5-7 mm , more preferably 6 mm, and a length of 10-40 mm, preferably 20-30 mm. According to the present invention the grid 3 has furthermore a central area 6 which protrudes out of the plane of the grid frame 9 in the direction of the airflow in the filter unit, i.e. downwards in figure 2. In the shown embodiment the central area 6 has a spherical form, i.e. the form of a segment of a sphere. The radius of curvature of the spherical central area 6 of the grid is 300- 550 mm, preferably 350-500 mm. In the embodiment shown in figures 1 and 2, the central area 6 of the grid having a spherical form extends to the frame 4 in the middle of the sides thereof. The central area 6 protruding out of the plane of the frame is in figure 1 indicated by an interrupted line 7.

The filter package 2 is of a type in which the air passing through the filter package leaves the package in an even flow directed perpendicular to the plane of the frame 4. The filter package can for example be of the type described in US 5,236,480. Such a filter package comprises a first sheet of filter material folded in a zig-zag configuration to form alternating open portions and apex portions at air inlet and outlet sides of said folded sheet material. The apex portions at the air outlet side of the folded first sheet lie substantially in a common plane. Furthermore, a second sheet of air permeable fine mesh material is extended over the apex portions of the first sheet on the air outlet side of the filter package. Such a filter package establishes an even flow of air exiting from the filter apparatus.

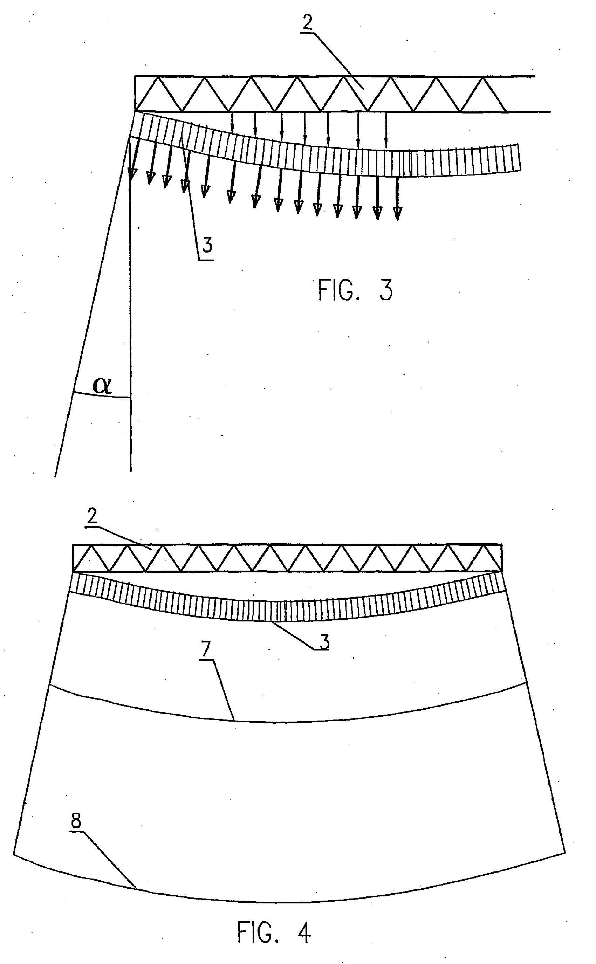

In figure 3, the airflow from an air filter unit according to the present invention is schematically shown. The direction of the air is indicated by arrows. As stated above the airflow out of the filter package 2 is perpendicular to the plane of the frame (not shown in figure 3), i.e. vertical if the air filter unit is mounted in a ceiling. When the airflow encounters the grid it is forced to flow though the individual tubes which means that the airflow leaving the grid 3 in every point will be perpendicular to the spherical outer surface of the grid 3. Thus, the airflow from the air filter unit having a grid with a spherical protrusion will cover a greater area than a similar filter unit with a planar grid. The lateral increase of the area covered by the airflow from the spherical grid could be quantified by the angle α in figure 3 representing the angle between the length direction of the outermost tubes in the spherical central area of the grid 3 and a vertical direction. The larger the angle α, the larger the lateral increase of the area covered by airflow from the air filter unit. The angle α can be between 10 - 40°, preferably between 20 - 30°.

In figure 4, the velocity profile of the airflow from an air filter unit according to the present invention is shown. It has been found that the air leaving the grid 3 has the same velocity as the air leaving the filter package 2, i.e. no pressure drop occurs when passing the grid 3. Lines 7 and 8 represent points where the air has the same velocity, the velocity being gradually decreasing.

It is clear that the smaller the radius of curvature of the grid, the larger the angle α and the lateral coverage of the airflow from the air filter unit. However, the angle α in figure 1 corresponds to the angle with which the airflow from the filter package hit the inlet to the tubes 5 of the grid. If this angle deviates too much from the vertical direction it is a risk that turbulence will be created when the air flows into the tubes thereby disturbing or destroying the desired even airflow from the grid. For this reason, the angle α should not exceed 40° if an even airflow is to be obtained. Furthermore, if the angle α lies in said range no appreciable pressure drop will arise when the air passes the grid.

Even if the angle α lies within said range small eddies will be created when the airflow from the filter package 2 encounters the walls of the tubes 5 in the grid 3. In order to permit those eddies to die out before the length of the tubes 5 should exceed 10 mm and preferably be around 20 mm. If the tubes are longer than 40 mm the protrusion in the central area 6 of the grid 3 can be difficult to form.

The grid can be manufactured by gluing a bundle of long tubes together and then cut planar grid pieces from the bundle of joined tubes. The protrusion of the grid can then be formed by pressing the sides of grid pieces towards each other so that a spherical protrusion is obtained and then place the thus deformed grid piece in a frame. The cut grid pieces can be square or circular. A grid produced in this way will be pre-stressed and can better take up vertical loads than, for example, a grid moulded to attain a spherical shape.

In the preferred embodiment, the tubes have a hexagonal cross-section. However, the tubes can have any cross-sectional shape without departing from the scope of invention. For example, the tubes can have a circular cross-section, especially if a mould is used to manufacture the grid.

By the present invention is obtained an air filter unit which is easy to manufacture and has a laterally extended air flow compared to known air filter units of the same type. Thereby, dead zones between adjacent such units can be reduced as well as a feeling of draft experienced by persons from known air filter unit. Although such air filter units provide air flows having a horizontal flow component they still provides an even air flow. In this respect it is pointed out that the horizontal components of the airflows of adjacent filter units are directed towards each other and thereby counteract each other when the air flows from adjacent filter units encounter one another.

The described embodiment can be modified in many ways. For example, the protrusion need not be a segment of a sphere but can have a planar middle portion and arcuate sides provided there is a smooth transition between the arcuate sides and the planar portion. The sides need not have the same radius of curvature. However, the angle between a vertical direction and the length direction of a tube may in no part of the grid exceed 45°. The scope of invention should therefore only be determined by the content of the enclosed patent claims.

## Claims

1. An air filter unit (1) having an inlet side an and outlet side and comprising a filter package (2) and a grid (3) disposed on the outlet side of the filter unit, said filter package and said grid being mounted in a frame (4),
wherein a central part (6) of the grid (3) is protruding out of the plane of the frame (4) on the outlet side of the filter unit, **characterised in that** the grid (3) comprises a pattern of flow channels (5), the walls of each channel being perpendicular to a plane tangential to the outer surface of the grid (3) at the place for the channel in question and said flow channels (5) in the grid (3) have a diameter of 3-9 mm and a length of 10-40 mm, and **in that** the angle between a direction perpendicular to the plane of frame (4) and the length direction of a flow channel (5) in any part of the grid is 45° or less.

2. The air filter unit according to claim 1, in which said protruding part (6) of the grid (3) comprises arcuate sides.

3. The air filter unit according to claim 2, in which said arcuate sides of the protruding part (6) of the grid (3) have the same radius of curvature.

4. The air filter unit according to claim 3, in which said radius of curvature of the sides of said protruding part (6) of the grid is 300-550mm, preferably 350-500 mm.

5. The air filter unit according to claim 2,3 or 4, in which said protruding part (6) of the grid (3) has the form of a part of a sphere.

6. The air filter unit according to any one of claims 1-5, in which the grid (3) is made of plastic material.

7. The air filter unit according to claim 6, in which the grid (3) is made of polycarbonate.

## Patentansprüche

1. Luftfiltereinheit (1) mit einer Einlassseite und einer Auslassseite, und umfassend
ein Filterelement (2) und ein Gitter (3), das an der Auslassseite der Filtereinheit angeordnet ist, wobei das Filterelement und das Gitter in einem Rahmen (4) angeordnet sind,
wobei einer zentraler Abschnitt (6) des Gitters (3) sich aus der Ebene des Rahmens (4) auf der Auslassseite der Filtereinheit erstreckt,
**dadurch gekennzeichnet, dass**
das Gitter (3) eine Anordnung an Strömungskanälen (5) umfasst,
die Wände von jedem Kanal senkrecht zu einer Ebene sind, die tangential zu der äußeren Oberfläche des Gitters (3) an dem Ort für den fraglichen Kanal ist, und
die Strömungskanäle (5) in der Ebene (3) einen Durchmesser von 3-9mm und eine Länge von 10-40mm aufweisen, und
dass der Winkel zwischen einer Richtung senkrecht zu der Ebene des Rahmens (4) und der Längsrichtung eines Strömungskanals (5) in irgendeinem Abschnitt des Gitters 45° oder weniger beträgt.

2. Luftfiltereinheit nach Anspruch 1, bei der der hervorstehende Abschnitt (6) des Gitters (3) gekrümmte Seiten aufweist.

3. Luftfiltereinheit nach Anspruch 2, bei der die gekrümmten Seiten des hervorstehenden Abschnitts (6) des Gitters (3) den gleichen Krümmungsradius aufweisen.

4. Luftfiltereinheit nach Anspruch 3, bei der der Krümmungsradius der Seiten des hervorstehenden Teils (6) des Gitters 300-550mm, bevorzugt 350-500mm, beträgt.

5. Luftfiltereinheit nach Anspruch 2, 3 oder 4, bei der der hervorstehende Teil (6) des Gitters (3) die Form eines Abschnitts einer Kugel aufweist.

6. Luftfiltereinheit nach einem der Ansprüche 1-5, bei der das Gitter (3) aus Plastikmaterial hergestellt ist.

7. Luftfiltereinheit nach Anspruch 6, bei der das Gitter (3) aus Polykarbonat hergestellt ist.

## Revendications

1. Unité de filtre à air (1) ayant un côté d'entrée et un côté de sortie et comprenant un appareillage de filtration (2) et une grille (3) disposés sur le côté de sortie de l'unité de filtre, ledit appareillage de filtration et ladite grille étant montés dans un châssis (4), dans laquelle une partie centrale (6) de la grille (3) fait saillie hors du plan du châssis (4) sur le côté de sortie de l'unité de filtre, **caractérisée en ce que** la grille (3) comprend un modèle de canaux d'écoulement (5), les parois de chaque canal étant perpendiculaires à un plan tangentiel à la surface externe de la grille (3) à l'emplacement du canal en question et lesdits canaux d'écoulement (5) dans la grille (3) ont un diamètre de 3 - 9 mm et une longueur de 10 - 40 mm, et **en ce que** l'angle entre une direction perpendiculaire au plan du châssis (4) et la direction de longueur d'un canal d'écoulement (5), dans l'une quelconque des parties de la grille, est de 45° ou moins.

2. Unité de filtre à air selon la revendication 1, dans laquelle ladite partie en saillie (6) de la grille (3) comprend des côtés arqués.

3. Unité de filtre à air selon la revendication 2, dans laquelle lesdits côtés arqués de la partie en saillie (6) de la grille (3) ont le même rayon de courbure.

4. Unité de filtre à air selon la revendication 3, dans laquelle ledit rayon de courbure des côtés de ladite partie en saillie (6) de la grille est de 300 - 550 mm, de préférence 350 - 500 mm.

5. Unité de filtre à air selon la revendication 2, 3 ou 4, dans laquelle ladite partie en saillie (6) de la grille (3) a la forme d'une partie d'une sphère.

6. Unité de filtre à air selon l'une quelconque des revendications 1 à 5, dans laquelle la grille (3) est réalisée à partir de matière plastique.

7. Unité de filtre à air selon la revendication 6, dans laquelle la grille (3) est réalisée à partir de polycarbonate.
